# EUROPEAN PATENT APPLICATION

(11) **EP 4 607 621 A1**
(43) Date of publication of application: **27.08.2025**
(21) Application number: 24878567.7
(22) Date of filing: 08.07.2024
(51) Int. Cl.: H01M 4/58, H01M 4/136, H01M 10/054

(54) **DOPED MANGANESE-BASED PRUSSIAN WHITE POSITIVE ELECTRODE MATERIAL, AND PREPARATION METHOD THEREFOR AND USE THEREOF**

(30) Priority: 18.10.2023 CN 202311352542
(71) Applicant: Natfound Technology Co., Ltd., Yueyang, Hunan 414000 (CN)
(72) Inventor: TU, Jian, Yueyang, Hunan 414000 (CN); XU, Xiongwen, Yueyang, Hunan 414000 (CN)
(74) Representative: Petraz, Gilberto Luigi
(86) International application number: PCT/CN2024/104191
(87) International publication number: WO 2025/081914

(57) **Abstract**

Disclosed in the present invention are a doped manganese-based Prussian white positive-electrode material, a preparation method therefor, and use thereof. The doped manganese-based Prussian white positive-electrode material of the present invention has a chemical formula of Na_{n-d}A_{d}Mn₁₋ₓMₓ[Fe(CN)₆]_{y}•zH₂O, where A is one or more of Li⁺, K⁺, Rb⁺, Cs⁺, NH₄⁺, Cu⁺, or Ag⁺; M is one or more of Ni²⁺, Fe²⁺, Co²⁺, Zn², or Cu²⁺; and 1.7 ≤ n ≤ 2, 0.02 ≤ d ≤ 0.2, 0.2 ≤ x ≤ 0.4, 0.9 ≤ y < 1, and 0 < z < 0.8. In the doped manganese-based Prussian white positive-electrode material of the present invention, positions Mn and Na are co-doped. Two doping ions of M and A are mutually synergistic to not only effectively inhibit the Jahn-Teller effect of Mn³⁺, but also to substantially reduce the content of crystal water in the positive-electrode material. Meanwhile, such a configuration further achieves the effects of reducing lattice defects, enhancing lattice stability and transport dynamics of Na ions such that the doped manganese-based Prussian white positive-electrode material has high capacity, good rate capability, and excellent cyclic stability.

## Description

### TECHNICAL FIELD

The present invention relates to the technical field of methods or apparatuses for the direct transformation of chemical energy into electric energy, and more specifically relates to a doped manganese-based Prussian white positive-electrode material, a preparation method therefor, and use thereof.

### BACKGROUND

The current energy storage batteries are mainly lithium-ion batteries represented by lithium iron phosphate; however, the limited resources of lithium cannot match the rapid development of the electric automobile field. Compared with the lithium resource, the sodium resource is richer and distributed more extensively. That is, sodium-ion batteries are more suitable for large-scale energy storage and industrialization. A positive-electrode material is the major influence factor to the performance of sodium-ion batteries. Currently, substances suitable as the positive-electrode materials of sodium-ion batteries mainly include layered oxides, Prussian materials, polyanion materials, etc. With a rigid lattice framework and large ion channel, the Prussian white positive-electrode material makes the intercalation and deintercalation of Na ions easier, and has a theoretical specific capacity of being up to 170 mAh/g and thus, is one of the most promising positive-electrode materials for sodium-ion batteries.

However, the existing Prussian white positive-electrode materials are mainly synthesized by a coprecipitation method or hydrothermal method. Both methods are to perform reaction in an aqueous solution and have a relatively fast reaction rate, which results that the process of crystal formation is always accompanied by more lattice defects and there are lots of crystal water. More lattice defects are against the cyclic stability of sodium-ion batteries, and lots of crystal water will reduce the content of Na ions in the positive-electrode material. Moreover, during charging and discharging processes, the crystal water is readily deintercalated from lattices to generate side reactions with sodium salts, thus resulting in poor cyclic stability of the sodium-ion batteries.

The shortcomings are mainly solved by means of element doping, control of crystal water, etc. in the prior art. For example, the prior art discloses a method for preparing a manganese-based Prussian white material. By element doping and using heavy water as a synthesis medium during the synthetic process, crystal water in lattices is stabilized by means of the synergistic effect of the two, thus improving the cycle performance. Meanwhile, in the synthetic process, a complexing agent sodium citrate and a surfactant sodium sulfate are introduced to interact with metal ions to improve the integrity and Na content of the lattices in products. However, the manganese-based Prussian white positive-electrode material has a lower capacity (124.5 mAh/g to the maximum), and the cyclic stability and rate capability thereof are also to be improved.

### SUMMARY

The objective of the present invention is to overcome the defects and deficiencies in the existing manganese-based Prussian white materials, i.e., lower capacity, poor cyclic stability and poor rate capability caused by more crystal defects and high content of crystal water; hence, provided is a doped manganese-based Prussian white positive-electrode material.

Another objective of the present invention is to provide a method for preparing a doped manganese-based Prussian white positive-electrode material.

A further objective of the present invention is to provide use of a doped manganese-based Prussian white positive-electrode material in a sodium-ion battery.

A still further objective of the present invention is to provide a positive-electrode plate containing the aforesaid doped manganese-based Prussian white positive-electrode material.

A still further objective of the present invention is to provide a sodium-ion battery containing the aforesaid doped manganese-based Prussian white positive-electrode material.

The objectives of the present invention are achieved by the following technical solution:
The present invention seeks protection for a doped manganese-based Prussian white positive-electrode material, having a chemical formula of Na_{n-d}A_{d}Mn₁₋ₓMₓ[Fe(CN)₆]_{y}•zH₂O;
where A is one or more of Li⁺, K⁺, Rb⁺, Cs⁺, NH₄⁺, Cu⁺, or Ag⁺; M is one or more of Ni²⁺, Fe²⁺, Co²⁺, Zn², or Cu²⁺; and 1.7 ≤ n ≤ 2, 0.02 ≤ d ≤ 0.2, 0.2 ≤ x ≤ 0.4, 0.9 ≤ y < 1, and 0 < z < 0.8.

In the doped manganese-based Prussian white positive-electrode material of the present invention, positions Mn and Na are co-doped. Two doping ions of M and A are mutually synergistic to not only effectively inhibit the Jahn-Teller effect of Mn³⁺, but also to substantially reduce the content of crystal water in the positive-electrode material. Meanwhile, such a configuration further achieves the effects of reducing lattice defects, enhancing lattice stability and transport dynamics of Na ions such that the doped manganese-based Prussian white positive-electrode material has high capacity, good rate capability, and excellent cyclic stability.

It further needs to be indicated that A in the aforesaid Na_{n-d}A_{d}Mn₁₋ₓMₓ[Fe(CN)₆]_{y}•zH₂O is derived from an iodide of A, and the A is doped at a Na position, and M is doped at a Mn position. Specifically, the aforesaid x may be 0.2-0.25, 0.25-0.3, 0.3-0.35, 0.35-0.40, 0.31, 0.38, 0.39, 0.30, or 0.40; the aforesaid d may be 0.02-0.05, 0.05-0.1, 0.15-0.2, 0.02, 0.03, 0.05, 0.06, or 0.08; preferably, the aforesaid z ≤ 0.6, and may be specifically 0.5, 0.51, 0.52, 0.53, 0.54, 0.55, 0.56, 0.57, 0.58, or 0.6.

Preferably, the A is at least two of Li⁺, K⁺, Rb⁺, Cs⁺, NH₄⁺, Cu⁺, or Ag⁺, and one of them is Li⁺.

Studies have found as follows: when A is at least two of Li⁺, K⁺, Rb⁺, Cs⁺, NH₄⁺, Cu⁺, or Ag⁺, and one of them is Li⁺, Li⁺ and Na⁺ are located at an interstitial site 8c; Li⁺ and Na⁺ have a deintercalation potential of lower than 3.6 V; that is, the deintercalation of Li⁺ may accelerate the deintercalation of Na⁺. Other monovalent cations (at least one of K⁺, Rb⁺, Cs⁺, NH₄⁺, Cu⁺, or Ag⁺) are located at an interstitial site 24d; and have a deintercalation potential of higher than 3.6 V The deintercalation potential is controlled below 3.6 V such that other monovalent cations are immobilized within lattices, thus stabilizing the lattices. Moreover, the existence of K⁺, Rb⁺, Cs⁺, NH₄⁺, Cu⁺, or Ag⁺ may not only reduce the content of the crystal water, but also may further immobilize the residual lattice water in lattices to inhibit the crystal water from deintercalating from the lattices to generate side reaction with sodium salts during the charging and discharging processes, thereby enhancing the cyclic stability.

Preferably, the M is at least two of Ni²⁺, Fe²⁺, Co²⁺, Zn²⁺, or Cu²⁺, and one of them is Fe²⁺. Studies have found that when M at least contains Fe²⁺, M is doped at the Mn position, which may further reduce the content of crystal water while exerting the effect of inhibiting the Jahn-Teller effect of Mn³⁺.

Specifically, the doped manganese-based Prussian white positive-electrode material is a monoclinic phase structure.

Specifically, the content of crystal water in the doped manganese-based Prussian white positive-electrode material of the present invention is ≤ 4 wt%, and preferably, the content of crystal water in the doped manganese-based Prussian white positive-electrode material is ≤ 3.5 wt%, e.g., may be 3.0 wt%, 3.1 wt%, 3.2 wt%, 3.3 wt%, and 3.4 wt%.

The present invention further seeks protection for a method for preparing the aforesaid doped manganese-based Prussian white positive-electrode material, including the following steps:
S1, mixing a solution I with a solution II well, and performing a coprecipitation reaction and a primary aging reaction in sequence, to obtain a suspension; and
S2, adding an iodide of A to the suspension provided in the S1 and performing a secondary aging reaction, to obtain the doped manganese-based Prussian white positive-electrode material;
where the solution I in the S1 consists of sodium ferrocyanide and water, and the solution II consists of a soluble divalent manganese salt, a soluble divalent M salt, sodium citrate, and water;
where M in the soluble divalent M salt is one or more of Ni²⁺, Fe²⁺, Co²⁺, Zn²⁺, or Cu²⁺; and the A in the S2 is one or more of Li⁺, K⁺, Rb⁺, Cs⁺, NH₄⁺, Cu⁺, or Ag⁺.

Optionally, a molar ratio of the sodium citrate to a mixture of the soluble divalent manganese salt and the soluble divalent M salt is (3-6):1.

Specifically, the coprecipitation reaction in the step S1 is performed at 40-80°C, and the primary aging reaction is performed at 40-80°C for 2-24 h. The coprecipitation reaction and aging reaction are performed under the reaction conditions, which is more beneficial to increasing product crystallinity and reducing lattice defects.

Specifically, the secondary aging reaction in the step S2 is performed at 40-80°C for 2-24 h. When an iodide of A is used as an additive for the secondary aging reaction, I⁻ is oxidated by Mn³⁺ and M ions to I₂ (elementary substance iodine); I₂ and I⁻ are reacted to form soluble I³⁻, and meanwhile, Mn³⁺ and M ions are reduced to divalent ions; A⁺ enters into Prussian white lattices, while water molecules are extruded out to reduce the content of the crystal water. In the meantime, product crystallinity may be further improved and lattice defects are reduced. The product further needs to be cooled, washed, separated, and subjected to vacuum drying after the secondary aging reaction.

Optionally, the concentration of sodium ferrocyanide in the aforesaid solution I is 0.1-1 mol/L; the sodium ferrocyanide with such concentration range may increase the product crystallinity, which is beneficial to reducing lattice defects and enhancing lattice stability. Meanwhile, the total concentration of the soluble divalent manganese salt and soluble divalent M salt in the aforesaid solution II is 0.1-1 mol/L. The soluble divalent manganese salt is one or more of manganese sulfate, manganese nitrate, manganese chloride, or manganese acetate. The soluble divalent M salt is selected from at least one of sulfates, nitrates, chlorides, or acetates thereof.

Use of the aforesaid doped manganese-based Prussian white positive-electrode material in a sodium-ion battery also falls within the protection scope of the present invention.

The present invention further seeks protection for a positive-electrode plate including a current collector and a positive-electrode active material layer disposed on at least one side of the current collector; the positive-electrode active material layer includes the aforesaid doped manganese-based Prussian white positive-electrode material.

The present invention further seeks protection for a sodium-ion battery, including a positive-electrode plate, a negative-electrode plate, an electrolyte located between the positive-electrode plate and the negative-electrode plate (a solid electrolyte or a liquid electrolyte + a separator available); the positive-electrode plate includes the aforesaid doped manganese-based Prussian white positive-electrode material.

Compared with the prior art, the present invention has the following advantageous technical effects:
In the doped manganese-based Prussian white positive-electrode material of the present invention, positions Mn and Na are co-doped. Two doping ions of M and A are mutually synergistic to not only effectively inhibit the Jahn-Teller effect of Mn³⁺, but also to substantially reduce the content of crystal water in the positive-electrode material. Meanwhile, such a configuration further achieves the effects of reducing lattice defects, enhancing lattice stability and transport dynamics of Na ions such that the doped manganese-based Prussian white positive-electrode material has high capacity, good rate capability, and excellent cyclic stability.

### BRIEF DESCRIPTION OF DRAWINGS

FIG. 1 shows an X-ray diffraction (XRD) pattern of a doped manganese-based Prussian white positive-electrode material in Example 1; and
FIG. 2 shows a charging-discharging curve graph of the doped manganese-based Prussian white positive-electrode material in Example 1.

### DETAILED DESCRIPTION OF EMBODIMENTS

The present invention will be further specified in combination with detailed embodiments below, but the examples are not construed as limiting the present invention in any form. Raw materials and reagents used in the examples of the present invention are purchased conventionally, unless otherwise specified.

### Example 1

A doped manganese-based Prussian white positive-electrode material has a following chemical formula:

Na_{1.72}K_{0.03}Li_{0.02}Mn_{0.62}Fe_{0.38}[Fe(CN)₆]_{0.94}•0.51H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 20% of a total number of moles of the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

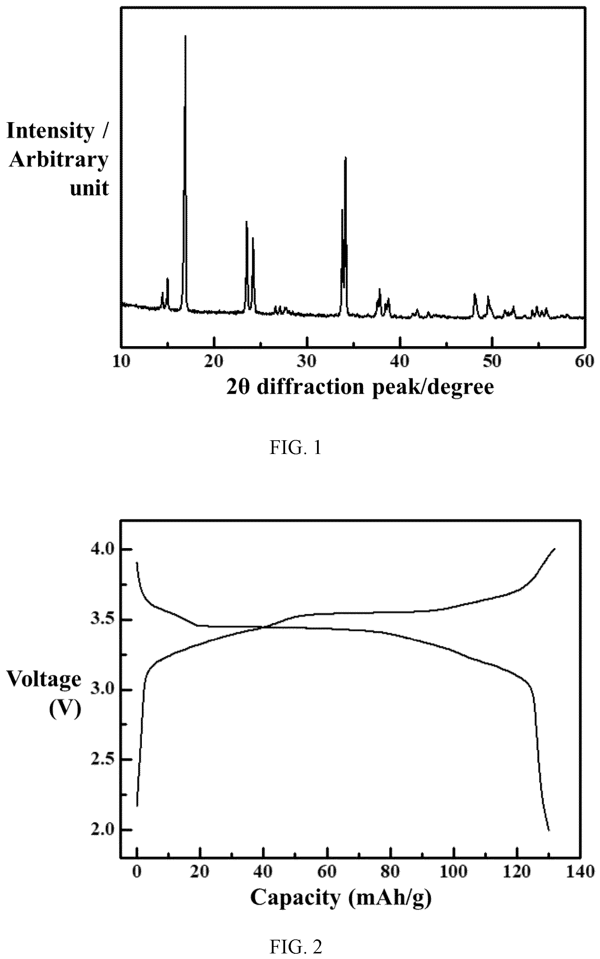

The doped manganese-based Prussian white positive-electrode material was detected. The obtained XRD pattern is shown in FIG. 1, and it can be seen that the doped manganese-based Prussian white positive-electrode material has a monoclinic phase structure. The XRD pattern is analyzed to determine that K and Li in Na position; moreover, Li⁺ and Na⁺ are located at the interstitial site 8c and the K⁺ is located at the interstitial site 24d.

### Example 2

A doped manganese-based Prussian white positive-electrode material has the following chemical formula:

Na_{1.73}K_{0.03}Li_{0.02}Mn_{0.69}Fe_{0.31}[Fe(CN)₆]_{0.95}•0.55H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.07mol/L, ferrous sulfate having a concentration of 0.03mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 20% of a total number of moles of the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Example 3

A doped manganese-based Prussian white positive-electrode material has the following chemical formula:

Na_{1.71}K_{0.05}Mn_{0.61}Fe_{0.39}[Fe(CN)₆]_{0.94}•0.58H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 35% of a total number of moles of the manganese sulfate and the ferrous sulfate) was added to the suspension of the S1, and subjected to a secondary aging reaction for 6 h under a condition of 60°C, to obtain the doped manganese-based Prussian white positive-electrode material.

### Example 4

A doped manganese-based Prussian white positive-electrode material has the following chemical formula:

Na_{1.70}Li_{0.06}Mn_{0.60}Fe_{0.40}[Fe(CN)₆]_{0.92}•0.58H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, LiI (having a molar amount of 3 5% of a total number of moles of the manganese sulfate and the ferrous sulfate) was added to the suspension of the S1, and subjected to a secondary aging reaction for 6 h under a condition of 60°C, to obtain the doped manganese-based Prussian white positive-electrode material.

### Example 5

A doped manganese-based Prussian white positive-electrode material has the following chemical formula:

Na_{1.75}K_{0.06}Mn_{0.61}Fe_{0.30}Ni_{0.09}[Fe(CN)₆]_{0.95}•0.53H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.03 mol/L, nickel sulfate having a concentration of 0.01 mol/L, sodium citrate having a molar amount 4 times the total number of moles of the manganese sulfate, the ferrous sulfate and the nickel sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 35% of a total number of moles of the manganese sulfate and the ferrous sulfate) was added to the suspension of the S1, and subjected to a secondary aging reaction for 6 h under a condition of 60°C, to obtain the doped manganese-based Prussian white positive-electrode material.

### Example 6

A doped manganese-based Prussian white positive-electrode material has the following chemical formula:

Na_{1.72}Cu_{0.04}Li_{0.02}Mn_{0.61}Fe_{0.39}[Fe(CN)₆]_{0.93}•0.56H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, CuI (having a molar amount of 20% of a total number of moles of the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Example 7

A doped manganese-based Prussian white positive-electrode material has the following chemical formula:

Na_{1.70}Cu_{0.03}Mn_{0.62}Fe_{0.38}[Fe(CN)₆]_{0.92}•0.57H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, CuI (having a molar amount of 20% of a total number of moles of the manganese sulfate and the ferrous sulfate) was added to the suspension of the S1, and subjected to a secondary aging reaction for 6 h under a condition of 60°C, to obtain the doped manganese-based Prussian white positive-electrode material.

### Example 8

A doped manganese-based Prussian white positive-electrode material has the following chemical formula:

Na_{1.73}Cs_{0.04}Li_{0.04}Mn_{0.61}Fe_{0.39}[Fe(CN)₆]_{0.95}•0.55H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, CsI (having a molar amount of 20% of a total number of moles of the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Comparative Example 1

A doped manganese-based Prussian white positive-electrode material has the following chemical formula:

Na_{1.70}Mn_{0.61}Fe_{0.39}[Fe(CN)₆]_{0.94}•1.44H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, the suspension in the S1 was subjected to a secondary aging reaction for 6 h under a condition of 60°C, to obtain the doped manganese-based Prussian white positive-electrode material.

### Comparative Example 2

A doped manganese-based Prussian white positive-electrode material has the following chemical formula:

Na_{1.70}K_{0.005}Li_{0.005}Mn_{0.60}Fe_{0.40}[Fe(CN)₆]_{0.94}•1.38H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 8% of a total number of moles of the manganese sulfate and the ferrous sulfate) and LiI (having a molar amount of 5% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Comparative Example 3

A doped manganese-based Prussian white positive-electrode material has the following chemical formula:

Na_{1.71}K_{0.03}Li_{0.02}Mn [Fe(CN)₆]_{0.93}•0.91H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.1 mol/L, sodium citrate having a molar amount 4 times the number of moles of the manganese sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 20% of a number of moles of the manganese sulfate) and LiI (having a molar amount of 15% of a number of moles of the manganese sulfate) were added to the suspension of the S1, and subjected to a secondary aging reaction for 6 h under a condition of 60°C, to obtain the doped manganese-based Prussian white positive-electrode material.

### Comparative Example 4

A doped manganese-based Prussian white positive-electrode material has the following chemical formula:

Na_{1.70}Mn [Fe(CN)₆]_{0.92}•1.61H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 1 mol/L, sodium citrate having a molar amount 4 times the number of moles of the manganese sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, the suspension in the S1 was subjected to a secondary aging reaction for 6 h under a condition of 60°C, to obtain the doped manganese-based Prussian white positive-electrode material.

### Comparative Example 5

A doped manganese-based Prussian white positive-electrode material has the following chemical formula:

Na_{1.70}K_{0.03}Li_{0.03}Mn_{0.89}Fe_{0.11}[Fe(CN)₆]_{0.93}•1.06H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.09mol/L, ferrous sulfate having a concentration of 0.01mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KI (having a molar amount of 20% of a total number of moles of the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Comparative Example 6

A doped manganese-based Prussian white positive-electrode material has the following chemical formula:

Na_{1.71}Ca_{0.03}Mn_{0.61}Fe_{0.39}[Fe(CN)₆]_{0.93}•1.281H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, CaI₂ (having a molar amount of 35% of a total number of moles of the manganese sulfate and the ferrous sulfate) was added to the suspension of the S1, and subjected to a secondary aging reaction for 6 h under a condition of 60°C, to obtain the doped manganese-based Prussian white positive-electrode material.

### Comparative Example 7

A doped manganese-based Prussian white positive-electrode material has the following chemical formula:

Na_{1.71}Li_{0.02}Mn_{0.63}Fe_{0.37}[Fe(CN)₆]_{0.94}•1.19H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KF (having a molar amount of 20% of a total number of moles the manganese sulfate and the ferrous sulfate) and LiI (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Comparative Example 8

A doped manganese-based Prussian white positive-electrode material has the following chemical formula:

Na_{1.73}K_{0.03}Mn_{0.03}Fe_{0.40}[Fe(CN)₆]_{0.94}•0.83H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KF (having a molar amount of 20% of a total number of moles of the manganese sulfate and the ferrous sulfate) and LiF (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Comparative Example 9

A doped manganese-based Prussian white positive-electrode material has the following chemical formula:

Na_{1.70}Mn_{0.61}Fe_{0.39}[Fe(CN)₆]_{0.93}•1.33H₂O.

The doped manganese-based Prussian white positive-electrode material was prepared by the following preparation method:
S1, a solution I (a mixture of sodium ferrocyanide having a concentration of 0.1 mol/L and deionized water) and a solution II (a mixture of manganese sulfate having a concentration of 0.06 mol/L, ferrous sulfate having a concentration of 0.04 mol/L, sodium citrate having a molar amount 4 times the total number of moles of the manganese sulfate and the ferrous sulfate, and deionized water) were mixed well, and firstly subjected to a coprecipitation reaction under a condition of 60°C, and then subjected to a primary aging reaction for 6 h under a condition of 60°C after the coprecipitation reaction, to obtain a suspension; and
S2, KF (having a molar amount of 20% of a total number of moles of the manganese sulfate and the ferrous sulfate) and LiF (having a molar amount of 15% of a total number of moles of the manganese sulfate and the ferrous sulfate) were added to the suspension of the S1, and subjected to a secondary aging reaction for 6 h under a condition of 60°C, to obtain the doped manganese-based Prussian white positive-electrode material.

### Performance Testing

(1) Test for the content of crystal water: the doped manganese-based Prussian white positive-electrode materials of Examples 1-8 and Comparative Examples 1-9 were subjected to thermogravimetric analysis in an argon atmosphere, respectively to obtain the weight of the crystal water; the content of crystal water (wt%) = (weight of crystal water/weight of the sample) *100%.
(2) Test for electrochemical performance: each of the doped manganese-based Prussian white positive-electrode materials of Examples 1-8 and Comparative Examples 1-9 was respectively made into a positive-electrode plate, and meanwhile, metal sodium served as a negative-electrode plate, glassfiber served as a separator, and a propylene carbonate (PC)/ethyl methyl carbonate (EMC) of 1M NaPF₆ served as an electrolyte solution, with the addition of fluorinated ethylene carbonate (FEC) being 4% of the electrolyte solution in weight; and then the above materials were assembled into a button cell for charge-discharge tests. 200 times of charge-discharge cycles were performed at a current density of 15 mA/g (0.1C), a voltage range of 2.0-4.0 V, and 1C; and the cyclic stability of the doped manganese-based Prussian white positive-electrode material was evaluated by the capacity retention ratio after 200 times of charge-discharge cycles. The rate capability of the doped manganese-based Prussian white positive-electrode material was evaluated by the discharge capacity retention ratios under the conditions of 10C and 1C. Test results are shown in Table 1 and FIG. 2: capacity retention ratio after 200 times of charge-discharge cycles at 1C (%) = (capacity at the 200th discharge/capacity at the 1st discharge) * 100%; 10C/1C discharge capacity retention ratio (%) = (discharge capacity at 10C/discharge capacity at 1C) *100%.

**Table 1 Performance of the doped manganese-based Prussian white positive-electrode material in each example and comparative example**

| No. | | Doped manganese-based Prussian white positive-electrode material | Discharge capacity at 0.1C (mAh/g) | Capacity retention ratio after 200 times of charge-discharge at 1C | 10C/1C discharge capacity retention ratio (%) | Content of crystal water (wt%) |
|---|---|---|---|---|---|---|
| Example | 1 | Na_{1.72}K_{0.03}Li_{0.02}Mn_{0.62}Fe_{0.38}[ Fe(CN)₆]_{0.94}•0.51H₂O | 130 | 93 | 84 | 3.0 |
| | 2 | Na_{1.73}K_{0.03}Li_{0.02}Mn_{0.69}Fe_{0.31}[ Fe(CN)₆]_{0.95}•0.55H₂O | 134 | 92 | 82 | 3.2 |
| | 3 | Na_{1.71}K_{0.05}Mn_{0.61}Fe_{0.39}[Fe(C N)₆]_{0.94}•0.58H₂O | 126 | 91 | 81 | 3.4 |
| | 4 | Na_{1.70}Li_{0.06}Mn_{0.60}Fe_{0.40}[Fe(C N)₆]_{0.92}•0.58H₂O | 127 | 90 | 83 | 3.5 |
| | 5 | Na_{1.75}K_{0.06}Mn_{0.61}Fe_{0.30}Ni_{0.09}[ Fe(CN)₆]_{0.95}•0.53H₂O | 131 | 95 | 86 | 3.1 |
| | 6 | Na_{1.72}Cu_{0.04}Li_{0.02}Mn_{0.61}Fe_{0.39} [Fe(CN)₆]_{0.93}•0.56H₂O | 129 | 92 | 83 | 3.3 |
| | 7 | Na_{1.70}Cu_{0.03}Mn_{0.62}Fe_{0.38}[Fe( CN)₆]_{0.92}•0.57H₂O | 127 | 90 | 80 | 3.4 |
| | 8 | Na_{1.7}3Cs_{0.04}Li_{0.04}Mn_{0.61}Fe_{0.39} [Fe(CN)₆]_{0.95}•0.55H₂O | 129 | 92 | 83 | 3.2 |
| Compara tive Example | 1 | Na_{1.70}Mn_{0.61}Fe_{0.39}[Fe(CN)₆]_{0 .94}•1.44H₂O | 123 | 82 | 76 | 8.1 |
| | 2 | Na_{1.70}K_{0.005}Li_{0.01}Mn_{0.60}Fe_{0.40} [Fe(CN)₆]_{0.94}•1.38H₂O | 125 | 85 | 79 | 7.8 |
| | 3 | Na_{1.71}K_{0.03}Li_{0.02}Mn [Fe(CN)₆]_{0.93}•0.91H₂O | 127 | 72 | 74 | 5.3 |
| | 4 | Na_{1.70}Mn [Fe(CN)₆]_{0.92}•1.61H₂O | 118 | 65 | 70 | 9.1 |
| | 5 | Na_{1.70}K_{0.03}Li_{0.03}Mn_{0.89}Fe_{0.11}[ Fe(CN)₆]_{0.93}•1.06H₂O | 129 | 76 | 78 | 6.1 |
| | 6 | Na_{1.71}Ca_{0.03}Mn_{0.61}Fe_{0.39}[Fe( CN)₆]_{0.93}•1.281H₂O | 127 | 77 | 79 | 7.3 |
| | 7 | Na_{1.71}Li_{0.02}Mn_{0.63}Fe_{0.37}[Fe(C N)₆]_{0.94}•1.19H₂O | 124 | 86 | 80 | 6.8 |
| | 8 | Na_{1.73}K_{0.03}Mn_{0.60}Fe_{0.40}[Fe(C N)₆]_{0.94}•0.83H₂O | 122 | 88 | 79 | 4.8 |
| | 9 | Na_{1.70}Mn_{0.61}Fe_{0.39}[Fe(CN)₆]_{0 .93}•1.33H₂O | 120 | 85 | 78 | 7.6 |

As can be seen from the test results of Table 1, as for the sodium-ion battery assembled by the positive-electrode plate made from each of the doped manganese-based Prussian white positive-electrode materials of the Examples 1-8 as the positive-electrode material, its capacity is up to 126-134 mAh/g under a condition of a voltage of 2.0-4.0V and 0.1C. Moreover, after 200 times of charge-discharge under a condition of 1C, its capacity retention ratio is up to 90%-95%, and the 10C/1C discharge capacity retention rate is up to 80%-86%. It indicates that the doped manganese-based Prussian white positive-electrode material of the present invention has high capacity, excellent cyclic stability and good rate capability.

As can be seen from Comparative Example 1, a divalent cation is doped at the Mn position, but the Na position is not doped with a monovalent cation (Li⁺ and K⁺), which will lead to the sharp increase of the content of crystal water in the manganese-based Prussian white positive-electrode material, and is also against the improvement of the cyclic stability and rate capability. As can be seen from Comparative Example 2, though the Mn position is doped with a divalent cation and the Na position is doped with a monovalent cation (Li⁺ and K⁺), but if the doping amount of the monovalent cation is too low, it is also difficult to effectively reduce the content of crystal water in the manganese-based Prussian white positive-electrode material, to improve the cyclic stability and to achieve good rate capability.

As can be seen from Comparative Example 3, the Na position is doped with a monovalent cation, but Mn position is not doped with a divalent cation, which may also somehow reduce the content of crystal water in the manganese-based Prussian white positive-electrode material, but also may cause decreases in the capacity, cyclic stability, and rate capability of the manganese-based Prussian white positive-electrode material simultaneously. As can be seen from Comparative Example 4, when positions Mn and Na are not doped, the content of crystal water in the manganese-based Prussian white positive-electrode material is up to 9.1 wt%, and meanwhile, the discharge capacity at 0.1C is merely 118 mAh/g, the capacity retention ratio after 200 times of charge-discharge recycles at 1C is 65%, and the 10C/1C discharge capacity retention rate is 70%. That is, the capacity, cyclic stability, and rate capability are all relatively poor.

As can be seen from Comparative Example 6, compared to doping a monovalent cation in the Na position, doping a divalent cation (Ca²⁺) in the Na position may reduce the content of crystal water to a certain extent, but it is hard to effectively improve the cyclic stability and rate capability. As can be seen from Comparative Examples 7-9, when a fluoride of A, or a mixture of an iodide and a fluoride of A was adopted for a secondary aging reaction and doping, as F⁻ may not participate in the redox reaction, the corresponding Li⁺ or K⁺ may not get into the position of Na⁺, which is thus hard to improve the capacity, cyclic stability, and rate capability of the doped manganese-based Prussian white positive-electrode material simultaneously.

In conclusion, the Na position is doped with Li to facilitate the improvement of the rate capability, but have less effect on the capacity; the Na position is doped with other monovalent elements to facilitate the improvement of the cycle life. The Na position is simultaneously doped with other monovalent elements and Li to further reduce the content of crystal water and to facilitate the improvement of the crystal structure stability and the immobilization of the residual crystal water, thus prolonging the cycle life of the material. Doping in positions Na and Mn may achieve a synergistic effect, which is beneficial to further reducing the content of crystal water in products, and further enhancing the lattice stability of products, thereby improving the rate capability and cycle life.

In addition, as can be seen from the charging-discharging curve of FIG. 2, the doped manganese-based Prussian white positive-electrode material in Example 1 has a specific discharge capacity of being up to 130 mAh/g and a smooth charging-discharging curve within a voltage range of 2.0-4.0 V and at a current density of 15 mA/g (0.1C). It indicates that the doped manganese-based Prussian white positive-electrode material not only has high capacity, but also has excellent cyclic stability.

Obviously, the above examples of the present invention are merely enumerated to specify the present invention clearly, but are not construed as limiting the embodiments of the present invention. Those skilled in the art could further make other different forms of changes or alterations on the basis of the above description. All the embodiments need and could not be enumerated exhaustively hereby. Any amendment, equivalent replacement, improvement, etc. made within the spirit and principle of the present invention shall fall within the protection scope of the claims of the present invention.

## Claims

1. A doped manganese-based Prussian white positive-electrode material, having a chemical formula of Na_{n-d}A_{d}Mn₁₋ₓMₓ[Fe(CN)₆]_{y}•zH₂O;
wherein A is one or more of Li⁺, K⁺, Rb⁺, Cs⁺, NH₄⁺, Cu⁺, or Ag⁺; M is one or more of Ni²⁺, Fe²⁺, Co²⁺, Zn², or Cu²⁺; and 1.7 ≤ n ≤ 2, 0.02 ≤ d ≤ 0.2, 0.2 ≤ x ≤ 0.4, 0.9 ≤ y < 1, and 0 < z < 0.8.

2. The doped manganese-based Prussian white positive-electrode material according to claim 1, wherein the A is at least two of Li⁺, K⁺, Rb⁺, Cs⁺, NH₄⁺, Cu⁺, or Ag⁺, and one of them is Li⁺.

3. The doped manganese-based Prussian white positive-electrode material according to claim 1, wherein the M is at least two of Ni²⁺, Fe²⁺, Co²⁺, Zn², or Cu²⁺; and one of them is Fe²⁺.

4. The doped manganese-based Prussian white positive-electrode material according to any one of claims 1-3, wherein the doped manganese-based Prussian white positive-electrode material is a monoclinic phase structure.

5. The doped manganese-based Prussian white positive-electrode material according to claim 1, wherein crystal water in the doped manganese-based Prussian white positive-electrode material has a content of not greater than 3.5 wt%.

6. A method for preparing the doped manganese-based Prussian white positive-electrode material according to any one of claims 1-5, comprising the following steps:
S1, mixing a solution I with a solution II well, and performing a coprecipitation reaction and a primary aging reaction in sequence, to obtain a suspension; and
S2, adding an iodide of A to the suspension in the S1 and performing a secondary aging reaction, to obtain the doped manganese-based Prussian white positive-electrode material;
wherein the solution I in the S1 consists of sodium ferrocyanide and water, and the solution II consists of a soluble divalent manganese salt, a soluble divalent M salt, sodium citrate, and water; and
M in the soluble divalent M salt is one or more of Ni²⁺, Fe²⁺, Co²⁺, Zn², or Cu²⁺; and the A in the S2 is one or more of Li⁺, K⁺, Rb⁺, Cs⁺, NH₄⁺, Cu⁺, or Ag⁺.

7. The preparation method according to claim 6, wherein a molar ratio of the sodium citrate to a mixture of the soluble divalent manganese salt and the soluble divalent M salt is (3-6):1.

8. Use of the doped manganese-based Prussian white positive-electrode material according to any one of claims 1-5 in a sodium-ion battery.

9. A positive-electrode plate, comprising a current collector and a positive-electrode active material layer disposed on at least one side of the current collector, wherein the positive-electrode active material layer comprises the doped manganese-based Prussian white positive-electrode material according to any one of claims 1-5.

10. A sodium-ion battery, comprising a positive-electrode plate, a negative-electrode plate, an electrolyte located between the positive-electrode plate and the negative-electrode plate, wherein the positive-electrode plate comprises the doped manganese-based Prussian white positive-electrode material according to any one of claims 1-5.
